# NEW EUROPEAN PATENT SPECIFICATION

(11) **EP 0 575 349 B2**
(45) Date of publication and mention of the opposition decision: **27.08.2003**
(45) Mention of the grant of the patent: 17.06.1998
(21) Application number: 92904038.4
(22) Date of filing: 14.02.1992
(51) Int. Cl.: C08L 3/02, C08K 5/07

(54) **BIODEGRADABLE POLYMERIC COMPOSITIONS BASED ON STARCH AND THERMOPLASTIC POLYMERS**
BIOLOGISCH ABBAUBARE POLYMERZUSAMMENSETZUNGEN BASIEREND AUF STÄRKE UND THERMOPLASTISCHEN POLYMEREN
COMPOSITIONS POLYMERES BIODEGRADABLES A BASE D'AMIDON ET DE POLYMERES THERMOPLASTIQUES

(30) Priority: 20.02.1991 IT TO91118
(43) Date of publication of application: 29.12.1993
(73) Proprietor: NOVAMONT S.p.A., 28100 Novara (IT)
(72) Inventor: BASTIOLI, Catia, I-28100 Novara (IT); BELLOTTI, Vittorio Via Mora e Gibin, 9, I-28010 Novara (IT); MONTINO, Alessandro, I-27038 Robbio Lomellina (IT)
(74) Representative: Rambelli, Paolo
(86) International application number: EP9200320
(87) International publication number: WO92014782

(56) References cited:
- EP-A- 0 304 401
- EP-A- 0 327 505
- EP-A- 0 400 532
- EP-A- 0 404 728
- EP-A- 0 407 350
- EP-A- 0 408 503
- EP-A- 0 409 781
- EP-A- 4 096 789
- WO-A-88/06609
- WO-A-90/05161
- WO-A-90/10671
- WO-A-92/02363
- CHEMICAL ABSTRACTS, vol. 86, no. 26, issued 1977, June 27, (Columbus, Ohio, USA), E.B. BAGLEY et al. "Graft copolymers of poly- saccharides with thermo-plastic polymers. A new type of filled plastic."
- KUNSTSTOFFLEXICON, Dr.K.Stöckert, Carl Hanser Verlag, 1981, pp.171-173
- RÖMPPS CHEMIELEXICON, 8.Auflage, 1988, pp.4604-4605

## Description

The present invention relates to thermoplastic polymeric compositions including starch and synthetic thermoplastic polymers and suitable for producing substantially biodegradable articles having satisfactory physical and mechanical properties by conventional techniques for the processing of thermoplastic materials.

Thermoplastic compositions of the type mentioned above are described in patent applications Nos. EP-A-32802, EP-A-327 505, EP-A-404 723, EP-A-404 727, EP-A-404 728 and EP-A-400532. Typically, these compositions are produced by the mixing of a starch with one or more synthetic thermoplastic polymers by means of a process which can destroy the crystallinity of the starch and create a structure which is interpenetrated or at least partially interpenetrated by the synthetic polymers. These processes may vary significantly in dependence on the chemical, physical and rheological characteristics of the synthetic component and the types of additives present.

Examples of these processes are described in patent applications Nos. EP-A-413798 and EP-A-400532.

The use of pharmaceutically-acceptable plasticising compositions with low molecular weights such as glycerine, acetic esters of glycerine, ethylene glycol, propylene glycol, sorbitol, sodium dioctylsulphosuccinate, triethyl citrate and tributyl citrate, in particular, in such compositions is known.

It has been found that, mainly because of changes in humidity and temperature undergone by articles produced by the processing of such plasticised compositions over a period of time, the articles are subject to the sweating (bleeding) and/or evaporation of the plasticiser which sometimes forms an oily film and sometimes crystalline dust on the surface of the article, thus limiting the article both from an aesthetic point of view and from the point of view of its handling.

The object of the present invention is to prevent the bleeding which takes place when known and conventional plasticisers are used.

For this purpose, a subject of the present invention is a thermoplastic polymeric composition including starch, at least one synthetic thermoplastic polymer and a plasticiser, as defined in appended claim 1.

Compounds which have vapour pressures lower than that of glycerine at ambient temperature (25°C) and which are soluble in water are preferred.

The aliphatic polyols of type a) and b) in claim 1 include compounds of the formula

OH-CH₂-(CHOH)ₙ-CH₂OH (I)

in which n is from 2 to 4 with the exclusion of sorbitol, such as, arabitol, adonitol, xylitol, mannitol, iditol, galactitol and allitol, and polyols which do not fall within the formula given above, such as trimethylolpropane, polyvinyl alcohol with from 3 to 20 repeating units and polyglycerol formed by from 2 to 10, preferably from 2 to 5, monomer units including mixtures of various oligomers.

The aliphatic polyol derivatives of paragraph c) and F in claim 1 preferably have structural formulae which can be obtained by the substitution of at least one alcoholic function of the polyol in question, which is preferably selected from those cited in the preceding paragraph including sorbitol, by a functional group selected from :
-O-(CH₂)ₙ-H in which n = 1-18, preferably 1-4,
-O-CH=CH-R₁ in which R₁ = H, or -CH₃,
-O(-CH₂-CHR₁-O)ₙ -H in which R₁ = H, or CH₃ and n = 1-20,
-O-(CH₂)ₙ-Ar in which Ar is a simple, substituted or heterocyclic aromatic radical and n = 0-4,
-OCO-H,
-OCO-CR₁R₂R₃ in which the R₁, R₂, and R₃ groups are the same or different and are selected from H, Cl and F,
-OCO-(CH₂)ₙ-H in which n = 2-18, preferably 2-5, -ONO₂,
-OPO₃M₂ in which M may be H, ammonium, an alkali metal, or an organic cation, particularly trimethylammonium, pyridinium or picoline,
-SO₃-Ar in which Ar is benzene or toluene,
-OCO-CH(SO₃M)-COOM in which the Ms are the same or different and are selected from H, an alkali metal, ammonium or an organic cation, particularly pyridinium, picoline or methylammonium,
-OCO-B-COOM in which B is (CH₂)ₙ where n=1-6 or -CH=CH-, M may be H, an alkali metal,
-(CH₂)ₙH where n=1-6 or an aryl group,
-OCONH-R₁ in which R₁ may be -H or an aliphatic or aromatic radical,
-O-(CH₂)ₙ-COOM in which n=1-6 and M may be H or an alkali metal, ammonium, or an organic cation, particularly pyridinium, trimethylammonium or picoline,
-O-(CH₂)ₙ-COOR₁ in which n=1-6, R₁ = H(CH₂)ₘ-where m=1-6,
-NR₁R₂ in which R₁ and R₂ = H, CH₃-, CH₃CH₂-,
-CH₂-CH₂OH, or a salified amino group,
-O-(CH₂)ₙ-NR₁R₂ in which n=1-4, R₁ and R₂ = H, CH₃-, CH₃CH₂-, or -CH₂-CH₂OH and in which the amino group may be salified, 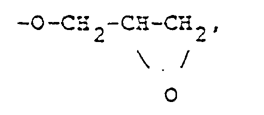
-O-CH₂-CHOH-CH₂-NR₁R₂ in which R₁ and R₂ are the same or different and are selected from H, and H(CH₂)ₙ where n=1-6, and in which the amino group may be salified,
-O-CH₂-CHOH-CH₂-R₁⁺Cl⁻ in which R₁⁺ is trialkylammonium, pyridinium or picoline,
-O-(CH₂)ₙR₁Cl⁻ in which n=1-6 and R₁ is trialkylammonium, pyridinium or picoline,
-O-(CH₂)ₙ-CN in which n=1-6,
-O-(CH₂)ₙ-CONH₂ in which n=1-6,
-O-(CH₂)ₘ-SO₂-(CH₂)ₙ-H in which m and n = 1-4, -SCSNH₂,
-O-SiX₃ and -O-SiOX₃ in which X may be an aliphatic or an aromatic radical.

Mono- and di-ethers and mono- and di-esters of the polyols of formula (I) given above are particularly preferred and monoethoxylate, monopropoxylate and monoacetate derivates, particularly of sorbitol, are most preferred.

The compounds of paragraph d) result from the joining of two or more polyol molecules by means of chain extenders such as bicarboxylic acids, aldehydes and isocyanates, in particular.

Preferred are compounds of the formula:

R-CH₂-(CHR)ₙ-CH₂-O-A-O-CH₂-(CHR)ₘ-CH₂-R

in which n and m have the same or different values from 1 to 6, the R groups are the same or different and are hydroxyl groups or have the meaning given above, and in which A is selected from the group consisting of
-CHR₁, R₁=H or H-(CH₂)ₙ- where n=1-5 (acetals),
-(CH₂)ₙ- where n=1-6,
-(CH₂-O-CH₂)ₙ in which n = 1-20,
-(CH₂CH₂-O)ₙ-CH₂CH₂- in which n=1-20,
-OC-(CH₂)ₙ-CO- in which n=0-6,
-OC-Ar-CO- in which Ar is an aromatic radical which is also heterocyclic,
-PO₂-,
-CONH-(CH₂)ₙNHCO-,
and compounds of the formula:

R-CH₂-(CHR)ₙ-CH₂-A-CH₂-(CHR)ₘ-CH₂-R

in which n and m are the same or different and are whole numbers from 1 to 6, the R groups are the same or different and are hydroxyl groups or have the meaning given above and in which A is selected from the group consisting of -NH-and -NH-(CH₂-CH₂-NH)ₙ- in which n is a whole number from 1 to 6.

Of the compounds given above, compounds in which only one of the R groups is a group forming an ether or an ester are preferred.

The term "polyol" is intended to include mono- and polysaccharides with up to 20 monosaccharide units.

The following monosaccharides come into consideration in particular:
- pentoses and their derivatives of the formula: 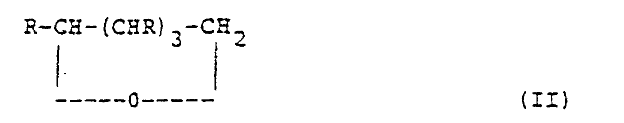 in which the R groups are the same or different and are hydroxyl groups or have the meaning given above.

Examples of such compounds are arabinose, lycose, ribose and xylose and, preferably, monoethers and monoesters thereof,
- aldohexoses and their derivatives of the formula: 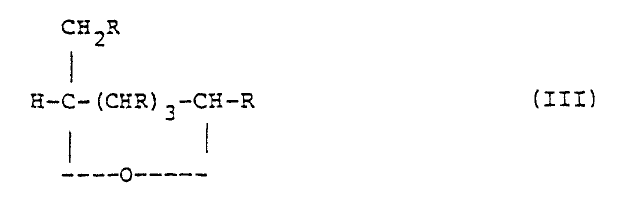 and ketohexoses and their derivatives of the formula: 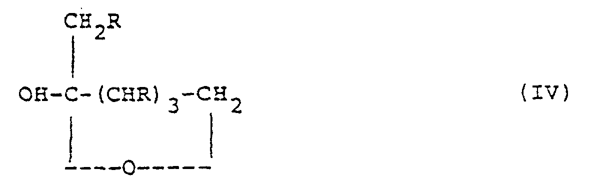 in which the R groups are the same or different and are hydroxyl groups or have the meaning given above.

Examples of these monosaccharides are glucose, fructose, mannose, allose, altrose, galactose, gulose, iodose, inositol, sorbose and talitol.

Of their etherified or esterified derivatives, monoethoxylate and monopropoxylate derivatives and monoesters, particularly of acetic acid, are preferred.

The polysaccharides include compounds having up to 20 repetitive units of formula (II), (III) or (IV) with molecular weights up to that of dextrin.

The R functional groups may be introduced into the basic polyol structure by known reactions, for example as described in Chapter 9 and in the literature cited in the publication "Polyvinyl alcohol" edited by C.A. Finch.

The oxidation products of the polyols of paragraph d) are obtained by the reaction of the polyols in question with periodic acid, hypochlorite or lead tetra-acetate.

The starch used in the polymeric compositions is preferably a native starch, particularly maize starch, but the term starch is intended also to include physically and chemically modified starches such as those cited in the same Applicant's applications Nos. EP-A-413798 and EP-A-400532.

For the synthetic polymeric component, the hydrophilic or essentially hydrophobic polymers described in the literature may be used in the starchy compositions. Of these, ethylene copolymers containing more than 50% by weight of ethylene and having melting points between 80 and 130°C, such as ethylene-acrylic acid, ethylene-vinyl alcohol, ethylene-vinyl acetate and mixtures thereof are considered in particular.

However, particularly preferred are polyvinyl alcohols and ethylene-vinyl alcohol copolymers with ethylene contents of less than 40% by weight with various degrees of hydrolysis, produced by the hydrolysis of the corresponding polyvinyl acetate or ethylene vinyl acetate respectively. The degree of hydrolysis of the ethylene-vinyl alcohol copolymer is preferably between 100% and 50%.

The alcoholic units of the polymers mentioned above may be partly or wholly modified to produce:
1) ethers resulting from reaction with:
   - ethylene oxide,
   - ethylene oxide substituted by alkyl radicals up to C₂₀ or by aromatic radicals,
   - acrylonitrile (Ce²⁺ initiator),
   - acrylamide,
   - arylalkyl halides,
   - chloroacetic acid,
   - methylchloromethyl ether,
   - silanes
2) inorganic and organic esters such as sulphates, nitrates, phosphates, arsenates, xanthates, carbamates urethanes, borates, titanates,
3) organic esters resulting from reactions with aliphatic or aromatic acids, chloroacyls, particularly of fatty acids or anhydrides,
4) acetals and ketals produced by reaction with:
   - aliphatic aldehydes with up to 22 carbon atoms,
   - unsaturated aliphatic aldehydes with up to 22 carbon atoms,
   - chloroacetaldehyde,
   - glyoxal,
   - aromatic aldehydes,
   - cyclic aliphatic aldehydes,
   - aliphatic ketones,
   - arylalkyl ketones,
   - alkylcycloalkyl ketones.

The reactions to produce the organic and inorganic esters and the acetals given above can easily be achieved as described in Chapter 9 and the literature cited in the publication "Polyvinyl alcohol" edited by C.A. Finch.

It is also possible to use polyvinyl alcohol and ethylene-vinyl alcohol multifunctional polymers (with ethylene contents of up to 40% by weight and degrees of hydrolysis of the acetate of between 100 and 50%) in which up to 50% of the ethylene may be substituted by co-monomers selected from the group consisting of:
propylene, isobutene, styrene, vinyl chloride, 1,1-dichloroethene, vinyl ethers of the formula CH₂ = CR-OR' in which R is hydrogen or a methyl group and R' is an alkyl group with from 1 to 18 carbon atoms, a cycloalkyl group or a polyether, acrylonitrile, methacrylonitrile, vinyl ketones of the formula CH₂ = CR-CO-CH₂-R' in which R is hydrogen or a methyl group and R' is hydrogen or a C₁-C₆ alkyl group, acrylic or methacrylic acid or their esters of the formula CH₂ = CR-COOR' in which R is hydrogen or a methyl group and R' is hydrogen or a C₁-C₆ alkyl group and the alkali metal or alkaline earth salts of these acids, vinyl derivatives of the formula CH₂ = CR-OCOR' in which R is hydrogen or a methyl group and R' is hydrogen, a methyl group, a methyl group mono-, bi- or trisubstituted with chloro or fluoro groups or C₂-C₆ alkyl groups, vinylcarbamates of the formula CH₂ = CR-CONR'R", in which R is hydrogen or a methyl group and R' and R" are the same or different and are hydrogen or C₁-C₃ alkyl groups, maleic anhydride, fumaric anhydride, vinylpyrrolidone, vinylpyridine, or 1-vinylimidazole.

The copolymerisation is achieved with the use of radical initiators such as hydrogen peroxide, peroxysulphates and benzoyl peroxides, as described in the chapter "Polymerisation processes of vinyl esters" and the literature cited on pages 406 et. seq. of Volume 17 of the "Encyclopedia of Polymer Science and Engineering".

The aforementioned plasticisers may also be used in compositions including starch, a first synthetic component selected from ethylene-vinyl alcohol copolymer, possibly modified polyvinyl alcohol and mixtures thereof and a further synthetic component comprising one or more polymers such as hydrophobic polymers of polyethylene or of its vinyl copolymers such as those cited above, or aliphatic polyesters (e.g. polyvinyl acetate, polycaprolactone, polyhydroxybutyrate (PHP) and polyhydroxybutyrate valerate (PHBV), polylactic acid, polyethylene and polybutylene adipates or sebacates), polyethers (e.g. polyoxymethylene, polyoxyethylene, polyoxypropylene, polyphenylene oxide), polyamides (nylon 6, nylon 12, etc.) polyacrylonitrile, polyurethanes, polyester/polyurethane copolymers, polyester/polyamide copolymers, polyglycolide or hydrophilic polymers such as: polyvinyl pyrrolidone, polyoxazoline, cellulose acetates and nitrates, regenerated cellulose, alkyl cellulose, carboxymethyl cellulose, casein-type proteins and salts thereof, natural gums such as gum arabic, algin and alginates, chitin and chitosan.

The relative proportions of starch and synthetic copolymer in the composition may vary within wide limits and is generally between 1:99 and 99:1 (anhydrous starch / synthetic polymer), preferably between 1:9 and 9:1.

As far as the biodegradability properties of the polymeric compositions produced are concerned, the compositions with high starch contents and particularly compositions in which the anhydrous starch content is from 20 to 80% of the total quantity of anhydrous starch and synthetic polymer are preferred.

When a blend of synthetic polymers is used, including the above mentioned first and second hydrophobic or hydrophilic synthetic component, the weight ratio of said component is preferably between 1:6 and 6:1.

The concentration of the plasticiser may vary within wide limits in dependence of the mechanical properties to be obtained in the articles produced with the use of the polymeric composition. The concentration of the plasticiser is preferably from 1 to 50% and most preferably from 5 to 40% of the total composition by weight.

The polymeric material may also include agents which can destroy hydrogen bonds, such as urea and alkali-metal or alkaline-earth hydroxides which are added to the starch and copolymer mixture in quantities of between 0.5 and 20% of the weight of the entire composition.

The polymeric material may also include cross-linking agents, such as aldehydes, ketones and glyoxals, process coadjuvants and release and lubricating agents normally incorporated in compositions for moulding or extrusion, such as fatty acids, fatty-acid esters, higher alcohols, polythene waxes, fungicides, flame-proofing agents, herbicides, antioxidants, fertilisers, opacifiers and stabilisers.

The polymeric composition is preferably prepared by the mixing of the components cited above in an extruder heated to a temperature generally between 100 and 220°C. The composition supplied to the extruder includes water due to the intrinsic water content of the starch used (9-15% by weight) and water may be added as appropriate.

In order to produce articles with suitable mechanical properties as a result of the moulding or extrusion of the polymeric composition, the water content of the total composition is preferably reduced by intermediate degassing during the extrusion to a water content which varies according to the transformation technology and the degree of rigidity required of the final material.

The pressures to which the mixture is subjected during the heat treatment are typical for extrusion in single-and double-screw extruders. Although the process is preferably carried out in an extruder, the starch, synthetic polymer and plasticiser may be mixed by any device which ensures conditions of temperature and shearing stress suitable to render the starch and the polymer used compatible from a rheological point of view.

If synthetic polymers with high melting points, such as, for example, polyvinyl alcohol and ethylene-vinyl alcohol copolymer with ethylene contents no greater than 40% by weight are used, in particular, the plasticisers described also perform an important function in the process which leads to the formation of a composition with an (at least partially) interpenetrated structure. The melting points of these polymers (160-200°C) are so high that complete interpenetration with the starch molecules is impossible; the addition of plasticisers common to the starchy and polymeric components lowers the melting points of the synthetic polymers and at the same time changes their rheological behaviour.

Solely for this function, and with the synthetic polymers cited in the present description which have melting points of the order of 160-200°C, conventional plasticisers such as ethylene glycol, propylene glycol, sorbitol and glycerine can also be used either alone or mixed with the plasticisers described.

The preferred method of preparing the compositions of the invention includes the following steps:
- swelling the starch and synthetic polymer by means of the plasticiser and possibly water at a temperature between 80 and 180°C with a dynamic change in their melting points and rheological behaviour; this effect can be achieved, for example, during a first stage of the transportation of the components in an extruder, for periods of the order of 2 to 50 seconds,
- subjecting the mixture to shearing conditions corresponding to similar viscosity values of the two components so as to cause the interpenetration of the molecules of the two components,
- degassing the mixture freely, under controlled pressure or under vacuum to produce a melt at a temperature of 140-180°C with a liquid content such that bubbles are not created at atmospheric pressure, that is, for example, at the output of the extruder,
- cooling the finished product in a water bath or in air.

The whole method requires a pressure of between 0.5 and 10 MPa, preferably between 1 and 5 MPa.

As stated, the thermoplastic composition is preferably prepared by mixing the components cited directly; the starch may, however, also be treated beforehand in the presence of a plasticiser, possibly with added water, at a temperature of from 100 and 220° to produce a thermoplastic starch. This starch can be mixed with the synthetic polymer and a further quantity of plasticiser in a second step. For polyvinyl alcohol and ethylene-vinyl alcohol copolymer, a portion of the total quantity of plasticiser is added at the start of the mixing of the pretreated starch and the synthetic polymer since the plasticiser itself has to be available to modify the melting point and rheological behaviour of the polymer in order to make it compatible with the starch.

When a blend including a first synthetic component and a second synthetic component, as previously defined, is used, the process for preparing the compositions according to the invention may also be carried out by blending the first synthetic component with starch and plasticiser to obtain pellets and then blending such pellets with the second synthetic component in a subsequent extrusion step.

### Example 1 (comparative):

37 parts of Globe 3401 starch (11% by weight of water), 37 parts of ethylene vinyl alcohol with an ethylene content of 42% in moles and a degree of hydrolysis of the acetate groups of 99.5%, 3 parts of ethylene-acrylic acid copolymer with 20% of acrylic acid and a melt flow of 2 (at 125°c and a 0.325 kg load), 0.3 parts of Armid E, 5 parts of urea, 15 parts of glycerine, and 2.7 parts of water were mixed in a single-screw OMC extruder with a diameter d of 20 mm and an L/d of 30, operating with the following temperature profile: 90-180-150-140°c and having an intermediate degassing section. The extruded and granulated product which had a water content of 3.2% by weight was then moulded in an injection press to form plates with dimensions of 70 x 70 x 1 mm which were then inserted in a climatic cell programmed to carry our cycles from 20°c and 30% relative humidity to 30°C and 80% relative humidity over 6 hours for a total of 20 cycles.

After this treatment, the plates were oily.

### Example 2:

A composition corresponding to that of the comparative Example 1 in which the glycerine was replaced by a polyglycerol formed by condensation and having an average glycerine content of 4 moles.

The plates obtained and treated as described in Example 1 showed neither significant bleeding nor loss of plasticiser during the aging period.

### Example 3 (comparative):

A composition identical to that of Example 1 was used but with the use of sorbitol instead of glycerine.

At the end of the heating cycles, the plates had an aesthetically-unacceptable white dusty surface appearance.

### Examples 4-12:

Compositions identical to those of Example 1 were used with the glycerine replaced as indicated below.

In all cases the appearance of the plates after the heating cycles was aesthetically good since they did not appear oily and were not receptive to fingerprints neither did the plates show any loss of plasticiser over the period.

| Example No. | Plasticiser |
|---|---|
| 4 | Sorbitol acetate |
| 5 | Sorbitol diacetate |
| 6 | Sorbitol monoethoxylate |
| 7 | Sorbitol diethoxylate |
| 8 | Sorbitol dipropoxylate |
| 9 | Sorbitol hexapropoxylate |
| 10 | Aminosorbitol |
| 11 | Glucose/PEG (20 moles PEG) product of the reaction of glucose with ethylene oxide. |

Some of the compositions given above were filmed by blowing.

The mechanical characteristics of the films produced were generally good and in some cases better than the formulations with glycerine.

| Example | Load MPa | Extension % | Modulus MPa | Energy KJ/m² |
|---|---|---|---|---|
| 1 | 15 | 330 | 180 | 1650 |
| 3 | 14 | 250 | 155 | 1400 |
| 4 | 11 | 360 | 165 | 1700 |
| 5 | 10 | 180 | 340 | 1250 |
| 6 | 18 | 340 | 280 | 2150 |
| 7 | 13 | 310 | 160 | 1650 |
| 8 | 14 | 310 | 170 | 1540 |
| 9 | 10 | 35 | 390 | 650 |

Other plasticisers include:
- trimethylolpropane monoethoxylate,
- mannitol monoacetate,
- mannitol monoethoxylate,
- butyl glucoside,
- alpha-methyl glucoside,
- glucose monoethoxylate,
- the sodium salt of carboxymethylsorbitol,
- polyglycerol monoethoxylate (degree of polymerisation 3.9).

In the compositions according to the invention, and in the articles formed from these compositions, starch and the synthetic polymer form a structure which is at least partly interpenetrated at the molecular level. Particularly in the case of compositions in which the synthetic polymeric component comprises ethylene-vinyl alcohol polymer with the concentrations of starch and polymer in a ratio of from 1:4 to 4:1, the composition is considered to have an at least partly interpenetrated structure when one or more of the following phenomena occur:
- the starchy phase cannot be separated from the ethylene vinyl alcohol phase (EVOH) by making use of the solubility of the starch. This phenomenon can be observed not only in cold water but also in water at 100°C. In this case, the sample tends to break up but the separated particles retain the same proportions of EVOH and starch (FTIR method),
- a microstructure observed by TEM which may exhibit a complete absence of phases or the presence of phases with dimensions smaller than 0.3 microns; the phases are mixed with each other without clear outlines,
- the presence in the tg delta spectrum, upon dynamic-mechanical analysis, of a single beta transition linked to the mobility of the -OH groups of both the components with a modification of the peak from that of starch,
- mechanical properties close to those of PE at a T of 23°C and 50% humidity. Extensibility between 80 and 600% and breaking energy comparable with those of PE are achieved. These characteristics are far removed from those of the two starting products.

Moreover, phase separation would tend to reduce the extensibility and breaking energy.

This whole set of characteristics can be explained as resulting from "entanglements" of starch and EVOH chains which are made stronger than the amylopectin "branches", and the stabilisation of the structure by hydrogen bonds. This explanation is in no way binding with reference to the scope of the protection of the invention.

Formed articles, films, sheets and fibres produced from the polymeric compositions by injection moulding, extrusion, blow-extrusion, thermoforming and similar conventional methods for thermoplastics materials fall within the scope of the invention.

Specific applications comprise: films for nappies, mulch, packaging in general, films for protective coatings or films coextruded with biodegradable and non-biodegradable polymers,
- injection mouldings for syringe parts, tampon applicators, plant pots, etc.,
- thermoformed trays, bowls, blister packs,
- combinations with aluminium, paper or other polymers,
- extrusions such as cotton-wool sticks, sheets for thermoforming, folders for stationery, etc.,
- products expanded solely by water or by gases such as CO₂, applications in the packaging and hamburger-tray sectors and the like,
- fibres for wadding, non-woven fabrics and melt blow,
- bottles and containers produced by blow moulding.

## Claims

1. A thermoplastic polymeric composition including starch at least one synthetic thermoplastic polymer and a plasticizer in an amount of from 1 to 50% by weight and in which the starch and the polymer are in a weight ratio of from 1:9 to 9:1 as obtainable by subjecting a melt comprising said components to shearing conditions such as to cause an at least partial molecular interpenetration of the starch and polymer components **characterised in that** the plasticiser is selected from the group consisting of:
a) polyvinyl alcohol with 3 to 20 repeating units, polyglycerol formed by 2 to 10 monomer units or trimethylol propane;
b) polyols having the formulae
OH-CH₂-(CHOH)ₙ-CH₂OH (I)
in which n is from 2 to 4, with the exclusion of sorbitol
or 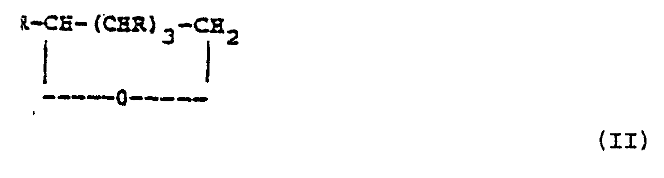 in which the R groups are hydroxyl groups
or 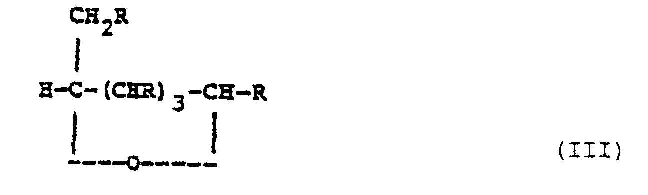 or 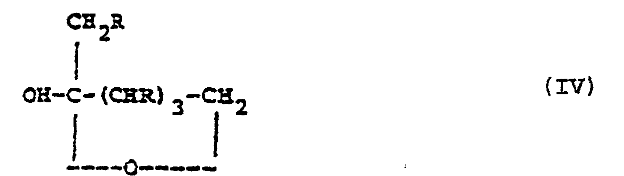 in which the R groups are hydroxyl groups or a polysaccharide having up to 20 repeating units of formula (II), (III) or (IV) ;
c) ethers, thioethers, inorganic and organic esters and acetals of polyols formed by from 1 to 20 repeating hydroxylated units of a), b) and sorbitol
d) reaction products of polyols having from 1 to 20 repeating hydroxylated units each including from 2 to 6 carbon atoms with chain extenders selected from the group consisting of bicarboxylic acids, aldehydes and isocyanates,
e) oxidation products of polyols having from 1 to 20 repeating hydroxylated units each including from 2 to 6 carbon atoms including at least one aldehydic or carboxylic functional group or mixtures thereof ;
f) amino derivatives of polyols formed by from 1 to 20 repeating hydroxylated units, each including from 2 to 6 carbon atoms.

2. A polymeric composition according to Claim 1 in which the plasticiser is selected from the group consisting of polyglycerol having from 2 to 5 monomeric units, arabitol, adonitol, xylitol, mannitol, iditol, galactitol, allitol.

3. A composition according to Claim 1 in which the plasticiser is a monoethoxylate, monopropoxylate or monoacetate derivative of sorbitol, polyglycerol having from 2 to 10 monomeric units, polyvinylalcohol having from 3 to 20 monomeric units, erythritol, trimethylolpropane or of a polyol mentioned in Claim 2.

4. A polymeric composition according to Claim 1, in which the plasticiser is a derivative of an aliphatic polyol as defined in a) and b) and sorbitol in which at least one alcoholic function is replaced by a functional group R selected from the group consisting of:
-O-(CH₂)ₙ-H in which n = 1-18,
-O-CH=CH-R₁ in which R₁ = H, or -CH₃,
-O(-CH₂-CHR₁-O)ₙ-H in which R₁ = H, or CH₃ and n = 1-20,
-O-(CH₂)ₙ-Ar in which Ar is a simple, substituted or heterocyclic aromatic radical and n = 0-4,
-OCO-H,
-OCO-CR₁R₂R₃ in which the R₁, R₂, and R₃ groups are the same or different and are selected from H, Cl and F
-OCO-(CH₂)ₙ-H in which n = 2-18,
-ONO₂,
-OPO₃M₂ in which M may be H, ammonium, an alkali metal, or an organic cation selected form the group consisting of trimethylammonium, pyridinium or picoline,
-SO₃-Ar in which Ar is benzene or toluene,
-OCO-CH(SO₃M)-COOM in which the Ms are the same or different and are selected from H, an alkali metal, ammonium, or an organic cation, selected form the group consisting of pyridinium, picoline or methylammonium,
-OCO-B-COOM in which B is (CH₂)ₙ where n=1-6 or -CH=CH-, M may be H, an alkali metal,
-(CH₂)ₙH where n=1-6, or an aryl group,
-OCONH-R₁ in which R₁ may be -H or an aliphatic or aromatic radical,
-O-(CH₂)ₙ-COOM in which n=1-6 and M may be H, an alkali metal, ammonium, or an organic caticn, selected from the group consisting of particularly pyridinium, trimethylammonium or picoline,
-O-(CH₂)₂ₙ-COOR₁ in which n=1-6, R₁ = H(CH₂)ₘ- where m=1-6,
-NR₁R₂ in which R₁ and R₂ = H, CH₃-, CH₃CH₂-,
-CH₂-CH₂OH, or a salified amino group,
-O-(CH₂)ₙ-NR₁R₂ in which n=1-4, R₁ and R₂ = H, CH₃-, CH₃CH₂-, or CH₂ CH₂OH, and in which the amino group may be salified, 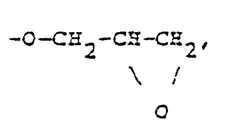
-O-CH₂-CHOH-CH₂-NR₁R₂ in which R₁ and R₂ are the same or different and are selected from H, H(CH₂)ₙ where n=1-6, and in which the amino group may be salified,
-O-CH₂-CHOH-CH₂-R₁⁺Cl⁻ in which R₁⁺ is trialkylammonium, pyridinium or picoline,
-O-(CH₂)ₙR₁⁺Cl⁻ in which n=1-6 and R₁⁺ is trialkylammonium, pyridium or picoline,
-O-(CH₂)ₙ-CN in which n=1-6,
-O-(CH₂)ₙ-CONH₂ in which n=1-6,
-O-(CH₂)ₘ-SO₂-(CH₂)ₙ-H in which m and n = 1-4,
-SCSNH₂,
-O-SiX₃ and -O-SiOX₃ in which X may be an aliphatic or an aromatic radical.

5. A composition according to Claim 1 in which the plasticiser is a compound of the formula:
R-CH₂-(CHR)ₙ-CH₂-O-A-O-CH₂-(CHR)ₘ-CH₂-R
in which n and m have the same or different values from 1 to 6, the R groups are the same or different and are hydroxyl groups or have the meaning attributed to R in Claim 4, and in which A is selected from the group consisting of:
-CHR₁,R₁=H or H-(CH₂)ₙ where n=1-5 (acetais),
-(CH₂)ₙ - where n=1-6,
-(CH₂-O-CH₂)ₙ in which n = 1-20,
-(CH₂CH₂-O)ₙ-CH₂CH₂ - in which n=1-20,
-OC-(CH₂)ₙ-CO- in which n=0-6,
-OC-Ar-CO- in which Ar is an aromatic radical which is also heterocyclic,
-PO₂-,
-CONH-(CH₂)ₙNHCO-

6. A composition according to Claim 1, in which the plasticiser is a compound of the formula:
R-CH₂-(CHR)ₙ-CH₂-A-CH₂-(CHR)ₘ-CH₂-R
in which n and m are the same or different and are whole numbers from 1 to 6, the R groups are the same or different and are hydroxyl groups or have the meaning given in Claim 4 and in which A is selected fron the group consisting of -NH- and -NH-(CH₂-CH₂-NH)ₙ - in which n is a whole number from 1 to 6.

7. A composition according to Claim 1 in which the plasticiser is a compound of the formula: 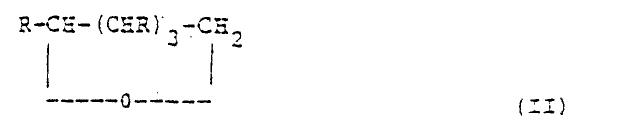 in which the R groups are the same or different and are hydroxyl groups or have the meaning attributed to R in Claim 4.

8. A composition according to Claim 1, in which the plasticiser is an aldohexose or a derivative thereof of the formula: 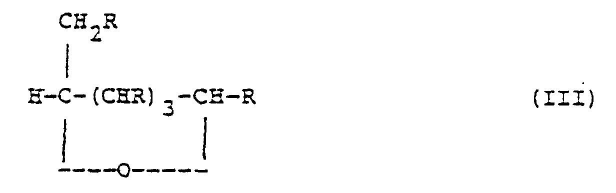 or a ketohexose or a derivative thereof of the formula: 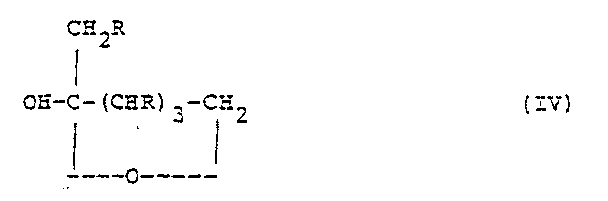 in which the R groups are the same or different and are hydroxyl groups or have the meanings given in Claim 4.

9. A composition according to any one of Claims 7 or 8 in which the plasticiser is a compound of formula (II), (III) or (IV) in which one of the R groups has the meaning given in Claim 4 and the rest of the R groups are hydroxyl groups.

10. A composition according to Claim 1, in which the plasticiser is selected from the group consisting of arabinose, lycose, xylose, glycose, fructose, mannose, allose, altrose, galactose, gulose, iodose, inositol, sorbose, talitol and monoethoxylate, monopropoxylate and monoacetate derivatives thereof.

11. A composition according to Claim 1 in which the plasticiser e) is the product of oxidation by an oxidising reagent selected from periodic acid, hypochlorite and lead tetraacetate.

12. A composition according to any one of the preceding claims, in which the weight of the plasticiser is from 5 to 40%, of the weight of the composition.

13. A composition according to any one of the preceding claims, in which the thermoplastic polymer is selected from the group consisting of polyvinyl alcohol, ethylene-acrylic acid, ethytene-vinyl acetate, ethylene-vinyl alcohol, modified ethylene-vinyl alcohol, modified polyvinyl alcohol and mixtures thereof.

14. A composition according to Claim 13 including a polymer of ethylene vinyl alcohol produced by the hydrolysis of the corresponding ethylene vinyl acetate with a degree of hydrolysis of the acetate groups of from 50 to 100% and an ethylene content less than 40% by weight.

15. A composition according to Claim 13 including a polymer of ethylene vinyl alcohol or polyvinyl alcohol having alcoholic functional groups which are at least partly etherified by reaction with a compound selected from the group consisting of ethylene oxide either unsubstituted or substituted by C₁-C₂₀ alkyl radicals or aromatic radicals, acryionitrile, acrylamide, arylalkyl halides, chloroacstic acid, methylchloromethylether and silanes.

16. A composition according to Claim 13 including a polymer of sthylene vinyl alcohol or polyvinyl alcohol including esterified alcoholic functional groups selected from the group consisting of sulphates, nitrates, phosphates, arsenates, xanthates, borates, titanates, urethanes and carbamates.

17. A composition according to Claim 13 including a polymer of ethylene vinyl alcohol or polyvinyl alcohol including alcoholic functional groups esterified by reaction with aliphatic or aromatic acids, chloroacyls or anhydrides.

18. A composition according to Claim 13 including a polymer of ethylene vinyl alcohol or polyvinyl alcohol including acetal functional groups produced by reaction with compounds selected from the group consisting of saturated and unsaturated aliphatic aldehydes having up to 22 carbon atoms, aromatic aldehydes; cycloaliphatic aldehydes, chloroacetaldehyde, glyoxal, aliphatic ketones, alkylcycloalkyl ketones and arylalkyl ketones.

19. A composition according to Claim 13 including a multifunctional copolymer of ethylene-vinyl alcohol with an ethylene content up to 40% by weight and a degree of hydrolysis of the acetate between 100 and 50% in which up to 50% of the ethylene may be replaced by co-monomers selected from the group consisting of: propylene, isobutene, styrene, vinyl chloride, 1,1-dichloroethene, vinyl ethers of the formula CH₂ = CR-OR' = in which R is hydrogen or a methyl group and R' is an alkyl group with from t to 18 carbon atoms, a cycloalkyl group or a polyether, acrylonitrile, methacrylonitrile, vinyl ketones of the formula CH₂ = CR-CO-CH₂-R' in which R is hydrogen or a methyl group and R' is hydrogen or a C₁-C₆ alkyl group, acrylic or methacrylic acia or their esters of the formula CH₂ = CR-COOR' in which R is hydrogen or a methyl group and R' is hydrogen or a C₁-C₆ alkyl group and the alkali metal or alkaline earth salts of these acids, vinyl derivatives of the formula CH₂ = CR-OCOR' in which R is hydrogen or a methyl group and R' is hydrogen, a methyl group, a methyl group mono- bi- or trisubstituted by chloro- or fluoro groups or C₂-C₆ alkyl groups, vinylcarbamates of the formula CH₂ = CR-CONR'R", in which R is hydrogen or a methyl group and R' and R" are the same or different and are hydrogen or C₁-C₃ alkyl groups, maleic anhydride, fumaric anhydride, vinylpyrrolidene, vinylpyridine, or 1-vinylimidazole.

20. A composition according to any one of Claims 13 to 19 including starch, ethylene-vinyl alcohol copolymer and/or polyvinyl alcohol and a polymer selected tram the hydrophobic polymers of polyethylene or its vinyl copolymers, aliphatic polyesters polyethers, polyamides, polyacrylonitrile, polyurethanes, polyester/polyurethane copolymers, polyesters/polyamide copolymers, polyglycolice and hydrophilic polymer.

21. Articles formed from a polymeric composition according to any one of the preceding claims.

22. The use of the compounds cited in Claims 1 to 11 as plasticisers in starchy compositions.

23. A method of preparing a polymeric composition according to any one of Claims 1 to 20, **characterised in that** it includes the step of mixing starch, a synthetic polymer, a plasticiser and possibly water under temperature and pleasure conditions of between 100 and 220°C and from 0.5 to 100 MPa.

24. A method of preparing a polymeric composition according to any one of Claims 1 to 20 including the steps of:
a) mixing starch, a synthetic polymer and a plasticiser at a temperature between 80 and 180°C for a period such that the plasticiser causes the bulking of the starch and the polymer,
b) subjecting the mixture thus obtained to shearing conditions corresponding to similar viscosity values of the starchy and synthetic components so as to cause the interpenetration of the two components at the molecular level.

25. A method according to Claim 24 in which the mixture in a) includes water and including a step for degassing the mixture obtained in b) at a temperature from 140 to 180°C so as to obtain a molten mixture with a liquid content such as to avoid the formation of bubbles at atmospheric pressure.

26. A method according to Claim 24 in which the mixing periods in step a) are from 2 to 50 seconds.

27. A method according to Claim 24, in which the mixture is kept under a pressure of from 0.5 to 10 MPa during steps a) and b).

28. A composition according to Claim 20 including starch, ethylene-vinyl alcohol copolymer and/or polyvinylalcohol and an aliphatic polyester selected from the group consisting of polyvinylacetate, polycaprolactone, polyhydroxybutyrate (PHB), polyhydroxybutyrate/valerate, polyethylene adipate or sebacate and polybutylene adipate or sebacate.

29. A composition according to Claim 20 wherein said hydrophllic polymer is selected from the group consisting of polyvinylpyrrolidone, polyoxazoline, cellulose acetates and nitrates alkyl cellulose, carboxymethyl cellulose, casein proteins and salts thereof.

## Patentansprüche

1. Thermoplastische Polymer-Zusammensetzung, welche Stärke, zumindest ein synthetisches thermoplastisches Polymer und einen Weichmacher in einer Menge von 1 bis 50 Masse-% enthält, und worin die Stärke und das Polymer in einem Masseverhältnis von 1:9 bis 9:1 vorliegen, wie erhalten werden kann, indem eine Schmelze, die diese Komponenten umfasst, Scherbedingungen unterworfen wird, um eine zumindest teilweise molekulare Interpenetration der Stärke- und Polymer-Komponenten zu bewirken, **dadurch gekennzeichnet, dass** der Weichmacher ausgewählt ist aus der Gruppe bestehend aus:
a) Polivinylalkohol mit 3 bis 20 repetierenden Einheiten, Polyglycerin, das aus 2 bis 10 Monomer-Einheiten gebildet ist, oder Trimethylolpropan;
b) Polyolen mit den Formeln
OH-CH₂-(CHOH)ₙ-CH₂OH , (I)
worin n 2 bis 4 ist, ausgenommen Sorbit,
oder 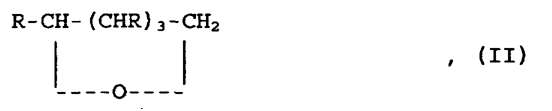 worin die R-Gruppen Hydroxylgruppen sind,
oder 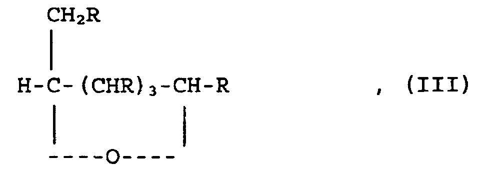 oder 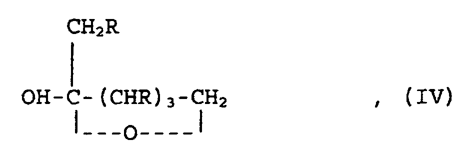 worin die R-Gruppen Hydroxylgruppen sind,
oder ein Polysaccharid mit bis zu 20 repetierenden Einheiten der Formel (II), (III) oder (IV);
c) Ethern, Thioethern, anorganischen und organischen Estern und Acetalen von Polyolen, die gebildet sind von 1 bis 20 repetierenden hydroxylierten Einheiten von a), b) und Sorbit,
d) Reaktionsprodukten von Polyolen mit 1 bis 20 repetierenden hydroxylierten Einheiten, die jeweils 2 bis 6 Kohlenstoffatome aufweisen, mit Ketten-Extendern ausgewählt aus der Gruppe bestehend aus Bicarbonsäuren. Aldehyden und Isocyanaten,
e) Oxidationsprodukten von Polyolen mit 1 bis 20 repetierenden hydroxylierten Einheiten, die jeweils 2 bis 6 Kohlenstoffatome, einschließlich mindestens einer Aldehyd- oder Carbonsäure-funktionellen Gruppe oder Mischungen davon, aufweisen,
f) Aminoderivaten von Polyolen, die durch 1 bis 20 repetierende hydroxylierte Einheiten gebildet sind, die jeweils 2 bis 6 Kohlenstoffatome aufweisen.

2. Polymer-Zusammensetzung nach Anspruch 1, worin der Weichmacher ausgewählt ist aus der Gruppe bestehend aus Polyglycerin mit 2 bis 5 Monomer-Einheiten, Arabit, Adonit, Xylit, Mannit, Idit, Galactit, Allit.

3. Zusammensetzung nach Anspruch 1, worin der Weichmacher ein Monoethoxylat-, Monopropoxylat- oder Monoacetat-Derivat von Sorbit, Polyglycerin mit 2 bis 10 Monomer-Einheiten, Polyvinylalkohol mit 3 bis 20 Monomer-Einheiten, Erythrit, Trimethylolpropan, oder ein in Anspruch 2 erwähntes Polyol ist.

4. Polymer-Zusammensetzung nach Anspruch 1, worin der Weichmacher ein Derivat eines aliphatischen Polyols wie in a) und b) definiert und Sorbit ist, worin mindestens eine alkoholische Funktion durch eine funktionelle Gruppe R ersetzt wird, die ausgewählt ist aus der Gruppe bestehend aus:
-O-(CH₂)ₙ-H, worin n = 1 bis 18,
-O-CH=CH-R₁, worin R₁ = H oder -CH₃,
-O(-CH₂-CHR₁-O)ₙ-H, worin R₁ = H oder CH3, und n = 1 bis 20,
-O-(CH₂)ₙ-Ar, worin Ar einen einfachen, substituierten oder heterocyclischen aromatischen Rest bedeutet, und n = Null bis 4,
-OCO-H,
-OCO-CR₁R₂R₃, worin die Gruppen R₁, R₂ und R₃ gleich oder verschieden sind und ausgewählt sind aus H, Cl und F,
-OCO-(CH₂)ₙ-H, worin n = 2 bis 18,
-ONO₂,
-OPO₃M₂, worin M bedeuten kann H, Ammonium, ein Alkalimetall oder ein organisches Kation, ausgewählt aus der Gruppe bestehend aus Trimethylammonium, Pyridinium oder Picolin,
-SO₃-Ar, worin Ar Benzol oder Toluol darstellt,
-OCO-CH(SO₃M)-COOM, worin die M gleich oder verschieden sind und ausgewählt sind aus H, einem Alkalimetall, Ammonium oder einem organischen Kation, ausgewählt aus der Gruppe bestehend aus Pyridinium, Picolin oder Methylammonium,
-OCO-B-COOM, worin B (CH₂)ₙ , mit n = 1 bis 6, oder -CH=CH- darstellt, M bedeuten kann H, ein Alkalimetall, -(CH₂)ₙH, worin n = 1 bis 6, oder eine Aryl-Gruppe,
-OCONH-R₁, worin R₁ bedeuten kann -H oder einen aliphatischen oder aromatischen Rest,
-O-(CH₂)ₙ-COOM, worin n = 1 bis 6, und M bedeuten kann H, ein Alkalimetall, Ammonium oder ein organisches Kation, ausgewählt aus der Gruppe insbesondere bestehend aus Pyridinium, Trimethylammonium oder Picolin,
-O-(CH₂)₂ₙ-COOR₁, worin n = 1 bis 6, R₁ = H(CH₂)ₘ-, wobei m = 1 bis 6,
-NR₁R₂, worin R₁ und R₂ = H, CH₃-, CH₃CH₂-, -CH₂-CH₂OH oder eine versalzte Amino-Gruppe,
-O-(CH₂)ₙ-NR₁R₂, worin n = 1 bis 4, R₁ und R₂ = H, CH₃-, CH₃CH₂- oder CH₂CH₂OH, und worin die Amino-Gruppe versalzt sein kann, 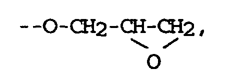
-O-CH₂-CHOH-CH₂-NR₁R₂, worin R₁ und R₂ gleich oder verschieden sind und ausgewählt sind aus H, H(CH₂)ₙ, wobei n = 1 bis 6, und worin die Amino-Gruppe versalzt sein kann,
-O-CH₂-CHOH-CH₂-R₁ ⁺Cl⁻, worin R₁⁺ Trialkylammonium, Pyridinium oder Picolin bedeutet,
-O-(CH₂)ₙ-R₁⁺Cl⁻, worin n = 1 bis 6 und R₁⁺ Trialkylammonium, Pyridinium oder Picolin bedeutet,
-O-(CH₂)ₙ-CN, worin n = 1 bis 6,
-O-(CH₂)ₙ-CONH₂, worin n = 1 bis 6,
-O-(CH₂)ₘ-SO₂-(CH₂)ₙ-H, worin m und n = 1 bis 4,
-SCSNH₂,
-O-SiX₃ und -O-SiOX₃, worin X einen aliphatischen oder einen aromatischen Rest darstellen kann.

5. Zusammensetzung nach Anspruch 1, worin der Weichmacher eine Verbindung der Formel
R-CH₂- (CHR)ₙ-CH₂-O-A-O-CH₂- (CHR)ₘ-CH₂-R
ist, worin n und m die gleichen oder verschiedene Werte von 1 bis 6 haben, die Gruppen R gleich oder verschieden sind und Hydroxyl-Gruppen darstellen oder die R in Anspruch 4 gegebene Bedeutung haben, und worin A ausgewählt ist aus der Gruppe bestehend aus:
-CHR₁, worin R₁ = H oder H-(CH₂)ₙ, wobei n = 1 bis 5 (Acetale),
-(CH₂)ₙ-, wobei n = 1 bis 6,
-(CH₂-O-CH₂)ₙ, wobei n = 1 bis 20,
-(CH₂CH₂-O)ₙ-CH₂CH₂-, wobei n = 1 bis 20,
-OC-(CH₂)ₙ-CO-, wobei n = Null bis 6,
-OC-Ar-CO-, worin Ar einen aromatischen Rest bedeutet, der auch heterocyclisch ist,
-PO₂-,
-CONH-(CH₂)ₙNHCO- .

6. Zusammensetzung nach Anspruch 1, worin der Weichmacher eine Verbindung der Formel
R-CH₂- ( CHR )ₙ-CH₂-A-CH₂- (CHR )ₘ-CH₂-R
ist, worin n und m gleich oder verschieden sind und ganze Zahlen von 1 bis 6 sind, die Gruppen R gleich oder verschieden sind und Hydroxyl-Gruppen darstellen oder die in Anspruch 4 angegebene Bedeutung haben, und worin A ausgewählt ist aus der Gruppe bestehend aus -NH- und -NH-(CH₂-CH₂-NH)ₙ-, wobei n eine ganze Zahl von 1 bis 6 ist.

7. Zusammensetzung nach Anspruch 1, worin der Weichmacher eine Verbindung der Formel 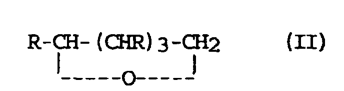 ist, worin die Gruppen R gleich oder verschieden sind und Hydroxyl-Gruppen darstellen oder die R in Anspruch 4 gegebene Bedeutung haben.

8. Zusammensetzung nach Anspruch 1, worin der Weichmacher eine Aldohexose oder ein Derivat hievon der Formel: 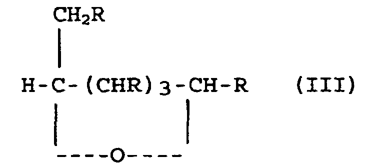 oder eine Ketohexose oder ein Derivat hievon der Formel: 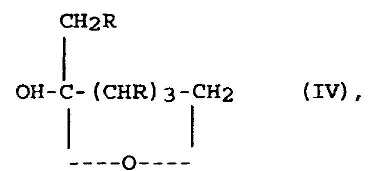 ist, worin die Gruppen R gleich oder verschieden sind und Hydroxyl-Gruppen darstellen oder die in Anspruch 4 angegebenen Bedeutungen haben.

9. Zusammensetzung nach einem der Ansprüche 7 oder 8, worin der Weichmacher eine Verbindung der Formel (II), (III) oder (IV) ist, wobei eine der Gruppen R die in Anspruch 4 angegebene Bedeutung hat, und die übrigen Gruppen R Hydroxyl-Gruppen sind.

10. Zusammensetzung nach Anspruch 1, worin der Weichmacher ausgewählt ist aus der Gruppe bestehend aus Arabinose, Lycose, Xylose, Glykose, Fructose, Mannose, Allose, Altrose, Galactose, Gulose, Iodose, Inosit, Sorbose, Talit und Monoethoxylat-, Monopropoxylat- und Monoacetat-Derivaten hievon.

11. Zusammensetzung nach Anspruch 1, worin der Weichmacher e) das Produkt einer Oxidation mit einem Oxidationsreagenz ist, das aus Periodsäure, Hypochlorit und Bleitetraacetat ausgewählt ist.

12. Zusammensetzung nach einem der vorhergehenden Ansprüche, worin die Masse des Weichmachers 5 bis 40 %, bezogen auf die Masse der Zusammensetzung, beträgt.

13. Zusammensetzung nach einem der vorhergehenden Ansprüche, worin das thermoplastische Polymer ausgewählt ist aus der Gruppe bestehend aus Polyvinylalkohol, Ethylen-Acrylsäure, E-thylen-Vinylacetat, Ethylen-Vinylalkohol, modifiziertem Ethylen-Vinylalkohol, modifiziertem Polyvinylalkohol und Mischungen hievon.

14. Zusammensetzung nach Anspruch 13, welche ein Polymer von Ethylen-Vinylalkohol enthält, das durch die Hydrolyse des entsprechenden Ethylen-Vinylacetats mit einem Hydrolysegrad der Acetat-Gruppen von 50 bis 100 % und einem Ethylen-Gehalt von weniger als 40 Masse-% hergestellt wird.

15. Zusammensetzung nach Anspruch 13, welche ein Polymer von Ethylen-Vinylalkohol oder Polyvinylalkohol mit Alkohol-funktionellen Gruppen enthält, die zumindest teilweise verethert werden durch Umsetzen mit einer Verbindung, ausgewählt aus der Gruppe bestehend aus Ethylenoxid, entweder unsubstituiert oder substituiert durch C₁-C₂₀-Alkylreste oder aromatische Reste, Acrylonitril, Acrylamid, Arylalkylhalogeniden, Chloressigsäure, Methylchlormethylether und Silanen.

16. Zusammensetzung nach Anspruch 13, welche ein Polymer von Ethylen-Vinylalkohol oder Polyvinylalkohol mit veresterten Alkohol-funktionellen Gruppen, ausgewählt aus der Gruppe bestehend aus Sulfaten, Nitraten, Phosphaten, Arsenaten, Xanthaten, Boraten, Titanaten, Urethanen und Carbamaten, enthält.

17. Zusammensetzung nach Anspruch 13, welche ein Polymer von Ethylen-Vinylalkohol oder Polyvinylalkohol mit Alkohol-funktionellen Gruppen enthält, die durch Umsetzen mit aliphatischen oder aromatischen Säuren, Chloracylen oder Anhydriden verestert werden.

18. Zusammensetzung nach Anspruch 13, welche ein Polymer von Ethylen-Vinylalkohol oder Polyvinylalkohol mit Acetalfunktionellen Gruppen enthält, die hergestellt werden durch Umsetzen mit Verbindungen, ausgewählt aus der Gruppe bestehend aus gesättigten und ungesättigten aliphatischen Aldehyden mit bis zu 22 Kohlenstoffatomen, aromatischen Aldehyden, cycloaliphatischen Aldehyden, Chloracetaldehyd, Glyoxal, aliphatischen Ketonen, Alkylcycloalkylketonen und Arylalkylketonen.

19. Zusammensetzung nach Anspruch 13, welche ein multifunktionelles Copolymer von Ethylen-Vinylalkohol mit einem Ethylen-Gehalt von bis zu 40 Masse-% und einem Hydrolysegrad des Acetats zwischen 100 und 50 % enthält, wobei bis zu 50 % des Ethylens ersetzt sein können durch Co-Monomere, ausgewählt aus der Gruppe bestehend aus: Propylen, Isobuten, Styrol, Vinylchlorid, 1,1-Dichlorethen, Vinylethern der Formel CH₂=CR-OR', worin R Wasserstoff oder eine Methyl-Gruppe bedeutet, und R' eine Alkyl-Gruppe mit 1 bis 18 Kohlenstoffatomen, eine Cycloalkyl-Gruppe oder einen Polyether darstellt, Acrylnitril, Methacrylnitril, Vinyl-ketonen der Formel CH₂=CR-CO-CH₂-R', worin R Wasserstoff oder eine Methyl-Gruppe bedeutet, und R' Wasserstoff oder eine C₁-C₆-Alkyl-Gruppe darstellt, Acryl- oder Methacrylsäure oder ihren Estern der Formel CH₂=CR-COOR', worin R Wasserstoff oder eine Methyl-Gruppe bedeutet, und R' Wasserstoff oder eine C₁-C₆-Alkyl-Gruppe darstellt, und den Alkalimetall- oder Erdalkalimetallsalzen dieser Säuren, Vinyl-Derivaten der Formel CH₂=CR-OCOR', worin R Wasserstoff oder eine Methyl-Gruppe bedeutet, und R' Wasserstoff, eine Methyl-Gruppe, eine Methyl-Gruppe mono-, bi- oder trisubstituiert durch Chlor- oder Fluor-Gruppen oder C₂-C₆-Alkyl-Gruppen, Vinylcarbamaten der Formel CH₂=CR-CONR'R", worin R Wasserstoff oder eine Methyl-Gruppe bedeutet, und R' und R" gleich oder verschieden sind und Wasserstoff oder C₁-C₃-Alkyl-Gruppen darstellen. Maleinsäureanhydrid, Fumarsäureanhydrid, Vinylpyrrolidon, Vinylpyridin oder 1-Vinylimidazol.

20. Zusammensetzung nach einem der Ansprüche 13 bis 19, welche enthält: Stärke, Ethylen-Vinylalkohol-Copolymer und/oder Polyvinylalkohol und ein Polymer, ausgewählt aus den hydrophoben Polymeren von Polyethylen oder seinen Vinyl-Copolymeren, aliphatischen Polyestern, Polyethern, Polyamiden, Polyacrylnitril, Polyurethanen, Polyester/Polyurethan-Copolymeren, Polyester/Polyamid-Copolymeren, Polyglykolid und hydrophilem Polymer.

21. Artikel, welche aus einer Polymer-Zusammensetzung nach einem der vorhergehenden Ansprüche gebildet sind.

22. Verwendung der in Anspruch 1 bis 11 angegebenen Verbindungen als Weichmacher in stärkehaltigen Zusammensetzungen.

23. Verfahren zur Herstellung einer Polymer-Zusammensetzung nach einem der Ansprüche 1 bis 20, **dadurch gekennzeichnet, daß** es den Schritt des Mischens von Stärke, einem synthetischen Polymer, einem Weichmacher und gegebenfalls Wasser unter Temperatur- und Druckbedingungen zwischen 100 und 220°C sowie 0,5 bis 100 MPa enthält.

24. Verfahren zur Herstellung einer Polymer-Zusammensetzung nach einem der Ansprüche 1 bis 20, welches die Schritte enthält:
a) Mischen von Stärke, einem synthetischen Polymer und einem Weichmacher bei einer Temperatur zwischen 80 und 180°C während eines derartigen Zeitraums, daß der Weichmacher die Massebildung der Stärke und des Polymers bewirkt,
b) Unterwerfen der so erhaltenen Mischung unter Scherbedingungen, die ähnlichen Viskositätswerten der stärkehaltigen und synthetischen Komponenten entsprechen, um die Interpenetration der beiden Komponenten auf der Molekülebene zu verursachen.

25. Verfahren nach Anspruch 24, bei welchem die Mischung in a) Wasser enthält, und welches einen Schritt zum Entgasen der in b) erhaltenen Mischung bei einer Temperatur von 140 bis 180°C enthält, um eine geschmolzene Mischung mit einem derartigen Flüssigkeitsgehalt zu erhalten, daß die Bildung von Blasen bei Atmosphärendruck vermieden wird.

26. Verfahren nach Anspruch 24, bei welchem die Mischzeiträume in Schritt a) 2 bis 50 Sekunden betragen.

27. Verfahren nach Anspruch 24, bei welchem die Mischung während der Schritte a) und b) unter einem Druck von 0,5 bis 10 MPa gehalten wird.

28. Zusammensetzung nach Anspruch 20, welche enthält: Stärke, Ethylen-Vinylalkohol-Copolymer und/oder Polyvinylalkohol und einen aliphatischen Polyester, ausgewählt aus der Gruppe bestehend aus Polyvinylacetat, Polycaprolacton, Polyhydroxybutyrat (PHB), Polyhydroxybutyrat/Valerat, Polyethylenadipat oder -sebacat und Polybutylenadipat oder -sebacat.

29. Zusammensetzung nach Anspruch 20, worin das hydrophile Polymer ausgewählt ist aus der Gruppe bestehend aus Polyvinylpyrrolidon, Polyoxazolin, Celluloseacetaten und -nitraten, Alkylcellulose, Carboxymethylcellulose, Caseinproteinen und Salzen hievon.

## Revendications

1. Composition polymère thermoplastique comprenant de l'amidon, au moins un polymère thermoplastique synthétique et un plastifiant en une quantité de 1 à 50 % en poids et dans laquelle l'amidon et le polymère sont présents dans un rapport en poids de 1:9 à 9:1, susceptible d'être obtenue en soumettant un produit à l'état fondu comprenant lesdits composés à des conditions de cisaillement aptes à forcer une interpénétration moléculaire au moins partielle des composés d'amidon et de polymère, **caractérisée en ce que** le plastifiant est choisi dans le groupe composé des :
a) alcools polyvinyliques ayant de 3 à 20 motifs répétés, polyglycérol ayant de 2 à 10 motifs monomères ou triméthylol propane ;
b) polyols ayant la formule :
OH-CH₂- (CHOH)ₙ-CH₂OH (I)
dans laquelle n varie de 2 à 4, à l'exclusion du sorbitol,
ou 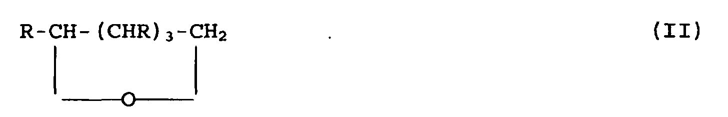 ou 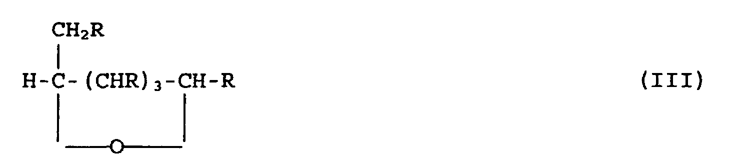 ou 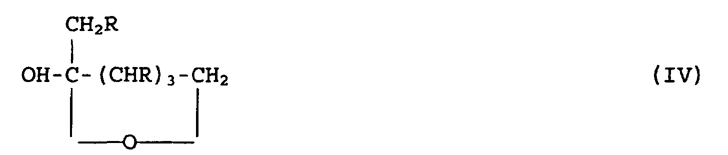 dans lesquelles les groupes R sont des groupes hydroxyle,
ou un polysaccharide ayant jusqu'à 20 motifs répétés ayant la formule (II), (III) ou (IV) ;
c) éthers, thioéthers, esters organiques ou inorganiques et acétals de polyols ayant de 1 à 20 motifs hydroxylés répétés, de a), de b) et de sorbitol,
d) produits de réaction de polyols ayant de 1 à 20 motifs hydroxylés répétés, chaque motif comprenant de 2 à 6 atomes de carbone avec des allongeurs de chaînes choisis parmi les acides dicarboxyliques, les aldéhydes et les isocyanates,
e) produits d'oxydation de polyols ayant de 1 à 20 motifs hydroxylés répétés, chaque motif comprenant de 2 à 6 atomes de carbone et au moins une fonction aldéhyde ou carboxylique, et les mélanges de ceux-ci,
f) dérivés aminés de polyols ayant de 1 à 20 motifs hydroxylés répétés, chacun comprenant de 2 à 6 atomes de carbone.

2. Composition polymère selon la revendication 1, dans laquelle le plastifiant est choisi parmi un polyglycérol ayant de 2 à 5 motifs monomères, l'arabitol, l'adonitol, le xylitol, le mannitol, l'iditol, le galactitol, l'allitol.

3. Composition selon la revendication 1, dans laquelle le plastifiant est un dérivé monoéthoxylate, monopropoxylate ou monoacétate de sorbitol, polyglycérol ayant de 2 à 10 motifs monomères, alcool polyvinylique ayant de 3 à 20 motifs monomères, érythritol, triméthylolpropane ou d'un polyol cité dans la revendication 2.

4. Composition polymère selon la revendication 1, dans laquelle le plastifiant est un dérivé d'un polyol aliphatique tel que défini en a) et b) et du sorbitol dans lequel au moins une fonction alcoolique est remplacée par un groupe fonctionnel R choisi dans le groupe composé de :
-O-(CH₂)ₙ-H dans lequel n = 1 à 18,
-O-CH=CH-R₁ dans lequel R₁ = H, ou -CH₃,
-O(-CH₂-CHR₁-O)ₙ-H dans lequel R₁ = H, ou CH₃ et n = 1 à 20,
-O―(CH₂)ₙ-Ar dans lequel Ar est un radical aromatique simple, substitué ou hétérocyclique et n = 0 à 4,
-OCO-H,
-OCO-CR₁R₂R₃ dans lequel les groupes R₁, R₂, et R₃ sont identiques ou différents et sont choisis parmi H, Cl et F,
-OCO-(CH₂)ₙ-H dans lequel n = 2 à 18,
-ONO₂,
-OPO₃M₂ dans lequel M peut être H, l'ammonium, un métal alcalin ou un cation organique choisi dans le groupe composé du triméthylammonium, du pyridinium ou de la picoline,
-SO₃-Ar dans lequel Ar est le benzène ou le toluène,
-OCO-CH(SO₃M)-COOM dans lequel les M sont identiques ou différents et sont choisis parmi H, un métal alcalin, l'ammonium, ou un cation organique choisi dans le groupe composé du pyridinium, de la picoline ou du méthylammonium,
-OCO-B-COOM dans lequel B est (CH₂)ₙ où n = 1 à 6 ou -CH=CH-, M peut être H, un métal alcalin, -(CH₂)ₙH où n = 1 à 6, ou un groupe aryle,
-OCONH-R₁ dans lequel R₁ peut être -H ou un radical aliphatique ou aromatique,
-O-(CH₂)ₙ-COOM dans lequel n = 1 à 6 et M peut être H, un métal alcalin, l'ammonium, ou un cation organique, choisi dans le groupe composé, notamment, du pyridinium, du triméthylammonium ou de la picoline,
-O-(CH₂)₂ₙ-COOR₁ dans lequel n = 1 à 6, R₁ = H(CH₂)ₘ- où m = 1 à 6,
-NR₁R₂ dans lequel R₁ et R₂ = H, CH₃-, CH₃CH₂-, -CH₂-CH₂OH, ou un groupe amino salifié,
-O-(CH₂)ₙ-NR₁R₂ dans lequel n = 1 à 4, R₁ et R₂ = H, CH₃-, CH₃CH₂- , ou -CH₂CH₂OH, et dans lequel le groupe aminé peut être salifié, 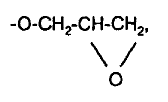
-O-CH₂-CHOH-CH₂-NR₁R₂ dans lequel R₁ et R₂ sont identiques ou différents et sont choisis parmi H, H(CH₂)ₙ où n = 1 à 6, et dans lequel le groupe aminé peut être salifié,
-O-CH₂-CHOH-CH₂-R₁⁺Cl⁻ dans lequel R₁⁺ est un trialkyl-ammonium, un pyridinium ou une picoline,
-O-(CH₂)ₙR₁⁺Cl⁻ dans lequel n = 1 à 6 et R₁⁺ est un trialkylammonium, un pyridinium ou une picoline,
-O-(CH₂)ₙ-CN dans lequel n = 1 à 6,
-O-(CH₂)ₙ-CONH₂ dans lequel n = 1 à 6,
-O-(CH₂)ₘ-SO₂-(CH₂)ₙ-H dans lequel m et n = 1 à 4,
-SCSNH₂,
-O-SiX₃ et -O-SiOX₃ dans lesquels X peut être un radical aliphatique ou aromatique.

5. Composition selon la revendication 1, dans laquelle le plastifiant est un composé de formule :
R-CH₂-(CHR)ₙ-CH₂-O-A-O-CH₂-(CHR)ₘ-CH₂-R
dans laquelle n et m ont des valeurs identiques ou différentes, de 1 à 6, les groupes R sont identiques ou différents et sont des groupes hydroxyle ou ont la signification attribuée à R dans la revendication 4, et dans laquelle A est choisi dans le groupe composé de :
-CHR₁, R₁ = H ou H-(CH₂)ₙ- où n = 1 à 5 (acétals),
-(CH₂)ₙ- où n = 1 à 6,
-(CH₂-O-CH₂)ₙ dans lequel n = 1 à 20,
-(CH₂CH₂-O)ₙ-CH₂CH₂- dans lequel n = 1 à 20,
-OC-(CH₂)ₙ-CO- dans lequel n = 0 à 6,
-OC-Ar-CO- dans lequel Ar est un radical aromatique qui est également hétérocyclique,
-PO₂-,
-CONH-(CH₂)ₙNHCO-.

6. Composition selon la revendication 1, dans laquelle le plastifiant est un composé de formule :
R-CH₂-(CHR)ₙ-CH₂-A-CH₂-(CHR)ₘ-CH₂-R
dans laquelle n et m sont identiques ou différents et sont des nombres entiers de 1 à 6, les groupes R sont identiques ou différents et sont des groupes hydroxyle ou ont la signification donnée dans la revendication 4, et dans laquelle A est choisi dans le groupe composé de -NH-, et -NH-(CH₂-CH₂-NH)ₙ- dans lequel n est un nombre entier de 1 à 6.

7. Composition selon la revendication 1, dans laquelle le plastifiant est un composé de formule : 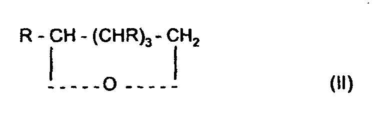 dans laquelle les groupes R sont identiques ou différents et sont des groupes hydroxyle ou ont la signification attribuée à R dans la revendication 4.

8. Composition selon la revendication 1, dans laquelle le plastifiant est un aldohexose ou un de ses dérivés de formule : 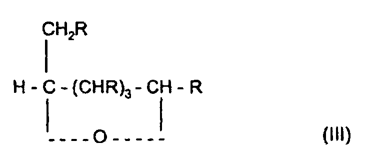 ou un cétohexose ou un de ses dérivés de formule : 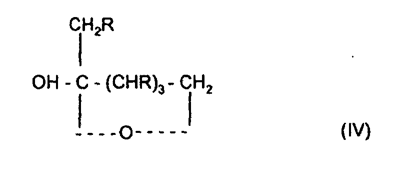 dans lesquelles les groupes R sont identiques ou différents et sont des groupes hydroxyle ou ont les significations données dans la revendication 4.

9. Composition selon l'une quelconque des revendications 7 ou 8, dans laquelle le plastifiant est un composé de formule (II), (III) ou (IV) dans laquelle un des groupes R a la signification donnée dans la revendication 4 et les autres groupes R sont des groupes hydroxyle.

10. Composition selon la revendication 1, dans laquelle le plastifiant est choisi dans le groupe composé de l'arabinose, du lycose, du xylose, du glycose, du fructose, du mannose, de l'allose, de l'altrose, du galactose, du gulose, de l'iodose, de l'inositol, du sorbose, du talilol et de leurs dérivés monoéthoxylate, monopropoxylate et monoacétate.

11. Composition selon la revendication 1, dans laquelle le plastifiant e) est le produit d'oxydation par un réactif oxydant choisi parmi l'acide périodique, l'hypochlorite et le tétraacétate de plomb.

12. Composition selon l'une quelconque des revendications précédentes, dans laquelle le poids du plastifiant représente de 5 à 40 %, du poids de la composition.

13. Composition selon l'une quelconque des revendications précédentes, dans laquelle le polymère thermoplastique est choisi dans le groupe composé de l'alcool polyvinylique, l'éthylène-acide acrylique, l'éthylène-acétate de vinyle, 1'éthylène-alcool vinylique, l'éthylène-alcool vinylique modifié, l'alcool polyvinylique modifié et leurs mélanges.

14. Composition selon la revendication 13 comprenant un polymère d'éthylène-alcool vinylique produit par l'hydrolyse de l'éthylène-acétate de vinyle correspondant avec un degré d'hydrolyse des groupes acétate de 50 à 100 % et une teneur en éthylène inférieure à 40 % en poids.

15. Composition selon la revendication 13 comprenant un polymère d'éthylène-alcool vinylique ou alcool polyvinylique ayant des groupes fonctionnels alcooliques qui sont au moins partiellement éthérifiés par réaction avec un composé choisi dans le groupe composé de l'oxyde d'éthylène soit non substitué, soit substitué par des radicaux alkyle ou des radicaux aromatiques en C₁-C₂₀, de l'acrylonitrile, l'acrylamide, des halogénures d'arylalkyle, de l'acide chloroacétique, du méthylchlorométhyléther et des silanes.

16. Composition selon la revendication 13 comprenant un polymère d'éthylène-alcool vinylique ou alcool polyvinylique contenant des groupes fonctionnels alcooliques estérifiés choisis dans le groupe composé des sulfates, des nitrates, des phosphates, des arséniates, des xanthates, des borates, des titanates, des uréthannes et des carbamates.

17. Composition selon la revendication 13 comprenant un polymère d'éthylène-alcool vinylique ou alcool polyvinylique contenant des groupes fonctionnels alcooliques estérifiés par réaction avec des acides aliphatiques ou aromatiques, des chloroacyles ou des anhydrides.

18. Composition selon la revendication 13 comprenant un polymère d'éthylène-alcool vinylique ou alcool polyvinylique contenant des groupes fonctionnels acétal produits par la réaction avec des composés choisis dans le groupe composé des aldéhydes aliphatiques saturés et insaturés ayant jusqu'à 22 atomes de carbone, des aldéhydes aromatiques, des aldéhydes cycloaliphatiques, du chloroacétaldéhyde, du glyoxal, des cétones aliphatiques, des alkylcycloalkylcétones et des arylalkylcétones.

19. Composition selon la revendication 13 comprenant un copolymère multifonctionnel d'éthylène-alcool vinylique ayant une teneur en éthylène pouvant aller jusqu'à 40 % en poids et un degré d'hydrolyse de l'acétate entre 100 et 50 %, dans lequel jusqu'à 50 % de l'éthylène peut être remplacé par des comonomères choisis dans le groupe comprenant les composés suivants :
le propylène, l'isobutène, le styrène, le chlorure de vinyle, le 1,1-dichloroéthène, les éthers vinyliques de formule CH₂ = CR-OR' dans laquelle R est un atome d'hydrogène ou un groupe méthyle et R' est un groupe alkyle ayant de 1 à 18 atomes de carbone, un groupe cycloalkyle ou un polyéther, un acrylonitrile, un méthacrylonitrile, les cétones vinyliques de formule CH₂ = CR-CO-CH₂-R' dans laquelle R est un atome d'hydrogène ou un groupe méthyle et R' est un atome d'hydrogène ou un groupe alkyle en C₁-C₆, un acide acrylique ou méthacrylique ou leurs esters de formule CH₂ = CR-COOR' dans laquelle R est un atome d'hydrogène ou un groupe méthyle et R' est un atome d'hydrogène ou un groupe alkyle en C₁-C₆ et les sels de métaux alcalins ou alcalino-terreux de ces acides, les dérivés vinyliques de formule CH₂ = CR-OCOR' dans laquelle R est un atome d'hydrogène ou un groupe méthyle et R' est un atome d'hydrogène, un groupe méthyle, un groupe méthyle mono-, bi- ou trisubstitué par des groupes chloro ou fluoro ou des groupes alkyle en C₂-C₆, les vinylcarbamates de formule CH₂ = CR-CONR'R", dans laquelle R est un atome d'hydrogène ou un groupe méthyle et R' et R" sont identiques ou différents et sont des atomes d'hydrogène ou des groupes alkyle en C₁-C₃, un anhydride maléique, un anhydride fumarique, le vinylpyrrolidone, la vinylpyridine ou le 1-vinylimidazole.

20. Composition selon l'une quelconque des revendications 13 à 19 comprenant de l'amidon, un copolymère éthylène-alcool vinylique et/ou alcool polyvinylique et un polymère choisi parmi les polymères hydrophobes de polyéthylène ou ses copolymères vinyliques, les polyesters aliphatiques, les polyéthers, les polyamides, le polyacrylonitrile, les polyuréthannes, les copolymères polyester/polyuréthanne, les copolymères polyesters/polyamide, un polyglycolide et un polymère hydrophile.

21. Articles formés à partir de la composition polymère selon l'une quelconque des revendications précédentes.

22. Utilisation des composés cités dans les revendications 1 à 11 à titre de plastifiants dans des compositions amylacées.

23. Procédé de préparation d'une composition polymère selon l'une quelconque des revendications 1 à 20, **caractérisée en ce qu'**elle comprend l'étape de mélange de l'amidon, d'un polymère synthétique, d'un plastifiant, et éventuellement d'eau, dans des conditions de température et de pression comprises entre 100 et 220°C et de 0,5 à 100 MPa.

24. Procédé de préparation d'une composition polymère selon l'une quelconque des revendications 1 à 20 comprenant les étapes de :
a) mélange de l'amidon, d'un polymère synthétique et d'un plastifiant, à une température entre 80 et 180°C pendant une durée telle que le plastifiant provoque le gonflement de l'amidon et du polymère.
b) soumission du mélange ainsi obtenu à des conditions de cisaillement correspondant à des valeurs de viscosité similaires pour les composés amylacés et synthétiques de façon à provoquer l'interpénétration des deux composés au niveau moléculaire.

25. Procédé selon la revendication 24, dans lequel le mélange dans a) comprend de l'eau et comprend une étape pour dégazéifier le mélange obtenu en b), à une température de 140 à 180°C de façon à obtenir un mélange à l'état fondu ayant une teneur en fractions liquides apte à empêcher la formation de bulles à pression atmosphérique.

26. Procédé selon la revendication 24, dans lequel les temps de mélange dans l'étape a) sont de 2 à 50 secondes.

27. Procédé selon la revendication 24, dans lequel le mélange est maintenu sous une pression de 0,5 à 10 MPa pendant les étapes a) et b).

28. Composition selon la revendication 20 comprenant de l'amidon, un copolymère éthylène-alcool vinylique et/ou alcool polyvinylique et un polyester aliphatique choisi dans le groupe composé du polyacétate de vinyle, du polycaprolactone, du polyhydroxybutyrate (PHB), du polyhydroxybutyrate/valérate, de l'adipate ou du sébaçate de polyéthylène et de l'adipate ou du sébaçate de polybutylène.

29. Composition selon la revendication 20, dans laquelle ledit polymère hydrophile est choisi dans le groupe composé du polyvinylpyrrolidone, de la polyoxazoline, des acétocelluloses et des nitroalkylcelluloses, de la carboxyméthylcellulose, des protéines de la caséine et de leur sels.
